# EUROPÄISCHE PATENTSCHRIFT

(11) **EP 0 602 516 B1**
(45) Veröffentlichungstag und Bekanntmachung des Hinweises auf die Patenterteilung: **22.11.1995**
(21) Anmeldenummer: 93119738.8
(22) Anmeldetag: 08.12.1993
(51) Int. Cl.: C07D 251/70, C07C 275/10, C08J 11/20

(54) **Verfahren zum chemischen Abbau von gehärteten Aminoplastharzen**
Process for the chemical destruction of cured aminoplast resins
Procédé pour la destruction chimique des résines aminoplastes durcis

(30) Priorität: 14.12.1992 DE 4242046
(43) Veröffentlichungstag der Anmeldung: 22.06.1994
(73) Patentinhaber: BASF Aktiengesellschaft, 67063 Ludwigshafen (DE)
(72) Erfinder: Weiser, Juergen, Dr., D-69198 Schriesheim (DE); Reuther, Wolfgang, Dr., D-69118 Heidelberg (DE); Hahn, Erwin, Dr., D-69118 Heidelberg (DE)

(56) Entgegenhaltungen:
- EP-A- 0 225 433
- EP-A- 0 408 947
- CHEMICAL ABSTRACTS, vol. 92, no. 6, 11. Februar 1980, Columbus, Ohio, US; abstract no. 44355y, G. COLLINS 'Pyrolysis oils from wastes - future new chemical raw materials?' Seite 142 ;
- CHEMICAL ABSTRACTS, vol. 114, no. 20, 20. Mai 1991, Columbus, Ohio, US; abstract no. 187239x, H.U. DUMMELSDORF ET AL. 'Complete reclamation of polymer wastes.' Seite 83 ;
- Database WPI, Sektion PQ, Woche 7701, Derwent Publications Ltd, London, GB, Class A21, AN 77-01112Y & JP-A-51133361 (Sumimoto Bakelite) 20 nov. 1976

## Beschreibung

Die Erfindung betrifft ein Verfahren zum chemischen Abbau von gehärteten Aminoplastharzen, das insbesondere für das Recycling von Formkörpern geeignet ist, die gehärtete Aminoplastharze enthalten oder aus diesen bestehen.

Für das Recycling von Polymeren können verschiedene Verfahren beschritten werden. Ein inzwischen häufig angewandtes Verfahren besteht im mechanischen Zerkleinern des möglichst sortenreinen Polymeren und einer anschließenden thermoplastischen Umformung. Dies ist jedoch bei gehärteten Aminoplastharzen nur eingeschränkt durchführbar. Zwar kann das gehärtete Aminoplastharz mechanisch zerkleinert werden, jedoch ist eine thermische Umformung unmöglich. Es besteht nur die Möglichkeit, das gemahlene Harzpulver mittels geeigneter Zusätze zu neuen Formkörpern zu verbinden.

In der JP-A 51 133 361 wird ein Verfahren zum chemischen Abbau von gehärteten Aminoplasten von Aminen und Amiden durch Behandlung mit Phenolsulfonsäuren beschrieben. Die erhaltene Reaktionsmischung aus Aminen, Amiden und Phenolsulfonsäure wird zum Schäumen und Härten von Phenolharzen verwendet.

Zu den Aminoplastharzen gehören auch Harnstoff- und Triazin-Harze. Derartige Harze werden zunehmend zu Formkörpern wie Fasern oder Schaumstoffen verarbeitet (vgl. DE-A-23 64 091, DE-A-27 54 525, DE-A-29 15 457, DE-A-41 23 050 und EP-A-408 947). Damit stellt sich aber auch die Frage nach einem stofflichen Recycling dieser Produkte.

Aufgabe der vorliegenden Erfindung war es nun, ein Verfahren zum chemischen Abbau von gehärteten Aminoplastharzen aufzuzeigen, das das chemische Recycling von Formkörpern ermöglicht, die Aminoplastharze enthalten oder aus diesen bestehen.

Es wurde überraschend gefunden, daß gehärtete Aminoplastharze durch Behandlung mit primären und/oder sekundären Aminen in Harnstoff- oder Triazin-Derivate gespalten werden können.

Gegenstand der Erfindung ist somit ein Verfahren zum chemischen Abbau von gehärteten Aminoplastharzen, wobei gehärtete Aminoplastharze, die gegebenenfalls Füllstoffe enthalten können, mit einem primären und/oder sekundären Amin bei Temperaturen von 40 bis 250°C umgesetzt werden.

Erfindungsgemäß sind gehärtete Aminoplastharze beispielsweise Kondensationsprodukte von Harnstoff, Melamin, Benzoguanamin, Acetoguanamin, Dicyandiamid, Guanidin oder Thioharnstoff mit Aldehyden, insbesondere mit Formaldehyd.

Bevorzugte Aminoplastharze sind Harnstoff- und/oder Triazinharze. Bei den Triazin-Harzen ist die Triazin-Komponente beispielsweise aus der Gruppe Benzoguanamin, Acetoguanamin und Melamin gewählt.

Vorzugsweise werden Melaminharze eingesetzt. Besonders bevorzugte Melaminharze sind hierbei die Kondensationsprodukte aus Melamin bzw. Melaminderivaten und Formaldehyd, wie sie beispielsweise in der EP-A-221 330 und der EP-A-408 947 beschrieben sind.

Das im erfindungsgemäßen Verfahren eingesetzte Aminoplastharz wird im allgemeinen durch mechanische Zerkleinerung von Formkörpern aus Aminoplasten wie beispielsweise Fasern und Schaumstoffen erhalten. Das dabei erhaltene feinteilige Aminoplastharz kann anschließend ohne weitere Vorbehandlung im erfindungsgemäßen Verfahren eingesetzt werden.

Die in den Formkörpern aus Aminoplasten vorliegenden Füllstoffe stören hierbei im allgemeinen nicht.

Füllstoffe sind hierbei im allgemeinen faser- oder pulverförmige anorganische Verstärkungsmittel oder Füllstoffe, wie Glasfasern, Metallpulver, Metallsalze oder Silikate, z.B. Kaolin, Talkum, Schwerspat, Quarz oder Kreide, ferner Pigmente und Farbstoffe und Flammschutzmittel.

Erfindungsgemäß wird das gehärtete Aminoplast-Harz mit dem gewünschten Amin bei einer Temperatur von 40 bis 250°C, vorzugsweise von 100 bis 200°C umgesetzt.

Im erfindungsgemäßen Verfahren werden primäre und/oder sekundäre Amine eingesetzt. Erfindungsgemäß werden somit Amine aus der Gruppe der primären und sekundären Alkyl- und Arylamine und der Polyamine, in denen mindestens eine Aminfunktion ein Wasserstoffatom aufweist, eingesetzt. Die Amine können gegebenenfalls substituiert sein.

Vorzugsweise wird unter einem inerten Gas wie Stickstoff oder Argon gearbeitet.

Zur Erhöhung der Reaktionstemperatur beim Einsatz von niedrigsiedenden Aminen kann unter Druck gearbeitet werden. Hierbei können gasförmige Reaktionsprodukte durch ein Überströmventil aus dem Reaktionsgefäß entfernt werden.

Zweckmäßigerweise verwendet man im erfindungsgemäßen Verfahren einen Überschuß an Amin, insbesondere bei Polyaminen. Bei Melamin-Formaldehyd-Harzen mit einem mittleren Molgewicht der kleinsten Monomereinheit von ca. 200 wie auch bei Harnstoff-Formaldehyd-Harzen mit einem mittleren Molgewicht der kleinsten Monomereinheit von ca. 90 werden hierzu im allgemeinen mindestens 3 Mole Amin, bezogen auf 1 Mol Monomereinheiten, zugesetzt.

Das erfindungsgemäße Verfahren kann auch in Gegenwart eines inerten Lösungsmittels durchgeführt werden.

Für Harnstoff-Harze dienen dazu z.B. Pyridin oder halogenierte Aromaten, für Melamin-Harze können z.B. Alkohole, insbesondere Glykole, verwendet werden. Das Gewichtsverhältnis von Amin bzw. der Summe aus Amin und Lösungsmittel zu Harz liegt vorzugsweise zwischen 1 und 50, besonders bevorzugt zwischen 10 und 20. Die Menge des eingesetzten Lösungsmittels wird hierbei so gewählt, daß die Lösung noch ausreichend gerührt werden kann.

Die Reaktionsdauer beträgt im allgemeinen zwischen 1 und 72 Stunden und ist abhängig von der Reaktionstemperatur, der Oberfläche des eingesetzten Harzes und der Polarität des verwendeten Amins. Bevorzugte Reaktionszeiten sind 12 bis 24 Stunden.

Bei Einsatz von Harnstoff-Harzen können hydroxyfunktionelle Amine Nebenreaktionen zeigen. Es kann zur Carbamat-Bildung kommen. Ist die Carbamat-Bildung jedoch erwünscht, können Alkohole verwendet werden.

Bei Einsatz von Triazin-Harzen ist der Zusatz eines sauren Katalysators zweckmäßig. Als saure Katalysatoren kommen alle starken und mittelstarken Säuren in Betracht, z.B. Salzsäure, Schwefelsäure, Salpetersäure, Phosphorsäure, Amidosulfonsäure oder p-Toluolsulfonsäure. Die Säuren können entweder in freier Form oder als Melamin- bzw. Amin-Salz zugegeben werden. Weiterhin ist auch die Zugabe als Salz einer Base, die schwächer als das eingesetzte Amin ist, möglich (z.B. Ammoniumsalze). Es können auch Lewis-Säuren eingesetzt werden.

Verwendet man Harnstoff-Harze, entstehen bei Verwendung von polaren Aminen (wie z.B. Alkanolamine, Alkoxyamine) und Temperaturen von 140 bis 160°C häufig innerhalb von wenigen Stunden klare Lösungen. Nach Destillation des überschüssigen Amins bzw. Lösungsmittels erhält man im allgemeinen klare, viskose Rückstände, bestehend aus den einzelnen Monomeren. Durch z.B. Kristallisation können diese gereinigt werden.

Verwendet man Triazin-Harze, können bei Temperaturen von 180 bis 200°C und Säurezusatz nach 1 bis 3 Stunden häufig klare Lösungen erhalten werden. Durch chromatographische Methoden kann das Fortschreiten der Umamidierungsreaktion verfolgt werden. Je nach gewünschtem Umsetzungsgrad kann die Reaktion durch Abkühlen beendet, die Säure mit Lauge neutralisiert, eventuell das Salz abgetrennt und das überschüssige Amin bzw. Lösungsmittel abdestilliert werden. Der Rückstand besteht aus einem oder mehreren Monomeren der entsprechenden Triazine.

Gehärtete Aminoplastharze, insbesondere Melamin-Harze, können mit dem erfindungsgemäßen Verfahren je nach Funktionalität des eingesetzten Amins in entsprechend funktionalisierte monomere Derivate überführt werden, die einfach zu isolieren sind und für verschiedene chemische Prozesse eingesetzt werden können. Ein Beispiel hierfür ist der Einsatz als Modifizierungskomponente in Melamin-Formaldehyd-Harzen, wie es in der DE-A-29 15 457, der DE-A-23 64 091, der EP-A-221 330 und der DE-A-41 23 050 beschrieben wird.

Dadurch ist es möglich, Formkörper aus Aminoplastharzen auf einfache und wirtschaftliche Weise einer stofflichen Wiederverwertung zuzuführen.

### Beispiel 1

400 g 2,2'-Aminoethoxyethanol und 10 g Ammoniumchlorid wurden vorgelegt und unter Stickstoff auf 150°C aufgeheizt. 20 g eines gemahlenen, gehärteten Melamin-Harzes mit einem Molverhältnis von Melamin zu Formaldehyd von 1:3 wurden portionsweise hinzugefügt. Die Reaktionstemperatur wurde auf 200°C gesteigert. Nach 1 h bildete sich eine klare Lösung. 12 Stunden nach Erreichen der 200°C-Marke wurde die Reaktion durch Abkühlen auf 100°C beendet. Es wurde mit 15 g 50 %iger NaOH neutralisiert und das entstandene Salz abfiltriert. Das überschüssige Amin wurde im Vakuum abdestilliert. Der Rückstand (36,8 g) bestand gemäß HPLC-Analyse (Auswertung der Flächen) aus:
23 Mol-% Mono-hydroxy-oxapentyl-melamin,
53 Mol-% Di-hydroxy-oxapentyl-melamin und
22 Mol-% Tri-hydroxy-oxapentyl-melamin.

### Beispiel 2

15 g eines gemahlenen, gehärteten Harnstoff-Harzes mit einem Molverhältnis von Harnstoff zu Formaldehyd von 1:1,1 wurden in 47 g 1-Amino-3-propanol 10 Stunden unter Stickstoff unter Rückfluß gekocht. Das überschüssige Amin wurde abdestilliert. Der Rückstand bestand nach HPLC-Analyse und quantitativer ¹³C-NMR-Analyse aus:
6 Mol-% Harnstoff
42 Mol-% Mono-hydroxypropyl-harnstoff
51 Mol-% Bis-hydroxypropyl-harnstoff

## Patentansprüche

1. Verfahren zum chemischen Abbau von gehärteten Aminoplastharzen, dadurch gekennzeichnet, daß gehärtete Aminoplastharze, die gegebenenfalls Füllstoffe enthalten können, mit einem primären und/oder sekundären Amin bei einer Temperatur von 40 bis 250°C umgesetzt werden.

2. Verfahren nach Anspruch 1, dadurch gekennzeichnet, daß als gehärtete Aminoplastharze Harnstoff- und/oder Triazinharze eingesetzt werden.

3. Verfahren nach Anspruch 2, dadurch gekennzeichnet, daß die Triazinharze Melaminharze sind.

## Claims

1. A process for chemically degrading cured amino resins, which comprises reacting cured amino resins, which may contain fillers, with a primary and/or secondary amine at from 40 to 250°C.

2. A process as claimed in claim 1, wherein the cured amino resins used are urea and/or triazine resins.

3. A process as claimed in claim 2, wherein the triazine resins are melamine resins.

## Revendications

1. Procédé de dégradation chimique de résines aminoplastes durcies, caractérisé en ce que les résines aminoplastes durcies, qui peuvent éventuellement contenir des charges, sont mises en réaction avec une amine primaire et/ou secondaire à une température de 40 à 250°C.

2. Procédé selon la revendication 1, caractérisé en ce que l'on traite, en tant que résines aminoplastes durcies, des résines d'urée et/ou de triazine.

3. Procédé selon la revendication 2, caractérisé en ce que les résines de triazine sont des résines de mélamine.
